(19) **Europäisches Patentamt**
**European Patent Office**
**Office européen des brevets**

(11) **EP 1 271 023 B1**

(12) **EUROPÄISCHE PATENTSCHRIFT**

(45) Veröffentlichungstag und Bekanntmachung des Hinweises auf die Patenterteilung:
**29.03.2006 Patentblatt 2006/13**

(51) Int Cl.:
***F16J 15/34*** *(2006.01)*

(21) Anmeldenummer: **02012537.3**

(22) Anmeldetag: **05.06.2002**

(54) **Gleitringdichtungsanordnung**

Mechanical seal arrangement

Garniture mécanique d'étanchéité

(84) Benannte Vertragsstaaten:
**CH DE FR IT LI NL**

(30) Priorität: **29.06.2001 DE 20110824 U**

(43) Veröffentlichungstag der Anmeldung:
**02.01.2003 Patentblatt 2003/01**

(73) Patentinhaber: **Burgmann Dichtungswerke GmbH & Co. KG**
**82515 Wolfratshausen (DE)**

(72) Erfinder:
- **Dröscher, Peter**
  **82538 Gelting (DE)**
- **Lang, Klaus, Dr.**
  **82547 Eurasburg (DE)**
- **Lederer, Günther**
  **82538 Geretsried (DE)**
- **Nosowicz, Josef, Dr.**
  **82538 Geretsried (DE)**
- **Schrüfer, Andreas**
  **82515 Wolfratshausen (DE)**
- **Steigenberger, Georg**
  **82541 Münsing (DE)**

(74) Vertreter: **Schmidt, Horst**
**Patentanwalt**
**Postfach 44 01 20**
**80750 München (DE)**

(56) Entgegenhaltungen:
**EP-A- 0 270 714**     **EP-A- 0 935 086**
**US-A- 4 212 475**     **US-B1- 6 250 642**

**Beschreibung**

Die Erfindung betrifft eine Gleitringdichtungsanordnung gemäss dem Oberbegriff des Anspruches 1.

Sie betrifft insbesondere eine aussenbeaufschlagte Gleitringdichtungsanordnung zum Abdichten eines gasförmigen Mediums zum Einsatz bei hohen abzudichtenden Drücken von z.B. 300 bar und mehr und hohen Gleitgeschwindigkeiten von z.B. 200 m sec$^{-1}$ und mehr. Bei derartigen Anwendungen werden für den rotierenden Gleitring keramische Materialien aufgrund ihrer guten Verschleisseigenschaften bevorzugt. Bei den hohen Drehgeschwindigkeiten kann der Gleitring wegen Reibung mit dem abzudichtenden Medium (Molekularreibung) eine Erwärmung in einem solchen Ausmass erfahren, dass dies zu nicht tolerierbaren thermischen Verwerfungen bzw. Verkantungen des rotierenden Gleitringes gegenüber dem stationären Gleitring führen kann, was die Dichtspaltgeometrie in unerwünschter Weise gegenüber der idealen parallelen Ausrichtung verändern kann. Bekannt ist es (BURGMANN, Gasgeschmierte Gleitringdichtungen, 1997 Selbstverlag, Seite 10), den rotierenden Gleitring selbstzentrierend anzuordnen, indem er gegenüber dem rotierenden Bauteil in Lossitz gehalten und axial abgestützt und dagegen mittels einer O-Ringdichtung abgedichtet ist. Dabei bedingt eine axiale sich aus dem Druck des abzudichtenden Mediums ergebende Kraft, mit der der Gleitring an einer axialen Anlagefläche anliegt, die Bildung einer radialen Reibkraft, wenn zwischen dem Gleitring und der Anlagefläche eine radiale, in Folge der Reibung behinderte Relativbewegung bei unterschiedlichen thermischen Wärmeausdehnungen dieser Bereiche auftritt. Diese Reibkraft kann Kippmomente in oder entgegen der Uhrzeigerrichtung auf den Gleitring ausüben, was eine unerwünschte A- bzw. V-Konfiguration des Dichtspaltes mit entsprechendem erhöhten Verschleiss an den Dichtflächen, unkontrollierter Leckage etc. zur Folge haben kann. Eebnso ist es aus der US-A-4212475 bekannt, den rotierenden Gleitring an einem rotierenden Stützelement abzustützen, wobei formal ein Belastungsfaktor zwischen > 0 und < 1,0 vorliegen dürfte. Dabie erfolgt die Abdichtung zwischen dem Gleitring und dem Stützelement, ebenso wie bei der vorgenannten Literaturstelle, mittels einer im Stützelement vorgesehen wärmeempfindlichen O-Ringdichtung.

Der Erfindung liegt die Aufgabe zugrunde, eine Gleitringdichtungsanordnung der gattungsgemässen Art zu schaffen, bei der, insbesondere unter den genannten extremen Einsatzbedingungen, durch thermisch bedingte Reibkräfte verursachte Verwerfungen des rotierenden Gleitringes mit den entsprechenden Auswirkungen auf die Dichtspaltgeometrie ganz oder weitestgehend vermieden werden können.

Diese Aufgabe wird erfindungsgemäss durch die Merkmale im kennzeichnenden Teil des Anspruches 1 gelöst. Die Erfindung beruht u.a. auf der Erkenntnis, dass die axiale Kraft, mit der der rotierende Gleitring gegen die axiale Anlagefläche gedrückt wird, abgesehen von dem abzudichtenden Druck, abhängig ist von der radialen Lage der Anlagefläche und einem hydraulischen Wirkdurchmesser für den Druck. Es wurden erfindungsgemäss Belastungsfaktoren ermittelt, bei denen die genannten Parameter in einer Art und Weise aufeinander abgestimmt sind, dass die aus der axialen Kraft sich ergebende Reibkraft minimal ist, so dass die dadurch bedingten Kippmomente auf den Gleitring vernachlässigbar gering werden und demzufolge eine ideale oder annähernd ideale parallele Dichtspaltkonfiguration selbst bei Einsatz der Gleitringdichtungsanordnung unter den eingangs genannten Betriebsbedingungen eingehalten werden kann. Bei der Erfindung ist die Anlagefläche an einem separaten Anlagering vorgesehen, der in Lossitz im Stützelement gehalten ist. Zwischen der Anlagefläche des Anlageringes und der benachbarten Stirnseite des rotierenden Gleitringes kommt eine dichtende Beziehung zustande, so dass es einer O-Ringdichtung nicht bedarf, wenn der auf die zusammenwirkenden Flächen bezogene Belastungsfakor innerhalb des erfindungsgemässen Bereiches liegt, ohne dass hiermit unerwünschte Auswirkungen auf die Dichtspaltgeometrie verbunden sind. Vorzugsweise besteht der Anlagering aus einem Material, das einen gleichen oder annähernd gleichen Wärmeausdehnungskoeffizient wie der des Materials hat, aus dem der Gleitring besteht. Hierdurch können thermisch bedingte Relativbewegungen zwischen der Anlagefläche und dem Gleitring weiter herabgesetzt werden. Gemäss einer anderen Weiterbildung der Erfindung ist ein Spaltbereich zwischen dem Anlagering und dem Stützelement durch ein Dichtungselement so abgedichtet, dass keine Gefahr einer Extrusion des Dichtungselementes unter den darauf einwirkenden Drücken in den Spaltbereich besteht.

Die Erfindung wird nachfolgend anhand einer Ausführungsform und der Zeichnung näher erläutert. Es zeigen:

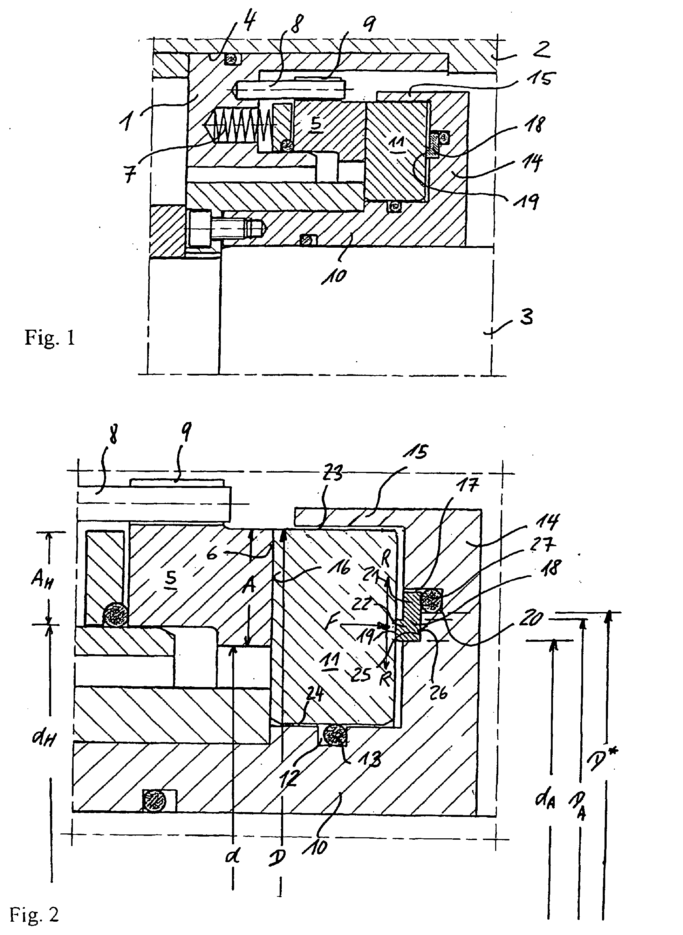

Fig. 1 in längsgeschnittener Ansicht eine Gleitringdichtungsanordnung gemäss einer Ausführungsform der Erfindung bei Einbau in einer abzudichtenden Gerätschaft, und

Fig. 2 in vergrösserter Ansicht ein Detail der Gleitringdichtungsanordnung nach Fig.1.

Das Bezugszeichen 1 betrifft ein Dichtungsgehäuse der Gleitringdichtungsanordnung. Das Dichtungsgehäuse 1 ist, wie dargestellt, in einer Bohrung 4 in einem Gehäuse 2 (in der Zeichnung nur fragmentarisch gezeigt) einer Gerätschaft, z.B. eines Verdichters, angeordnet und darin in geeigneter Weise festgelegt. Eine Welle 3, z.B. eine Verdichterlaufradwelle, erstreckt sich durch die Bohrung 4 nach aussen. Im Dichtungsgehäuse 1 ist ein stationärer Gleitring 5 axial beweglich gehalten, der mit einem rotierenden Gleitring 11 zusammenwirkt. Eine Vorspanneinrichtung, z.B. in Gestalt einer Vorspannfeder 7, die sich mit einem Ende am stationären Gleitring 5 und am anderen Ende am Dichtungsgehäuse 1 abstützt, ist vorgesehen, um den stationären Gleitring 5 mit einer Vorspannkraft zu beaufschlagen und gegen den rotierenden Gleitring 11 vorzuspannen. Es können mehrere umfänglich verteilt angeordnete Vorspannfedern 7 vorgesehen sein. Der stationäre Gleitring 5 ist gegen Verdrehung relativ zum Dichtungsgehäuse 1 gehalten. Obschon andere diesbezügliche Einrichtungen vorgesehen sein können, steht bei der vorliegenden Ausführungsform vom Dichtungsgehäuse 1 ein Mitnehmerbolzen 8 axial ab, der in eine am stationären Gleitring 5 vorgesehene axiale Ausnehmung 9 drehsichernd eingreift. Wie dargestellt, hat der rotierende Gleitring 11 vorzugsweise, jedoch nicht obligatorisch, einen im wesentlichen rechteckförmigen Querschnitt.

Auf der Welle 3 ist eine Buchse 10 drehfest montiert. Der rotierende Gleitring 11 ist auf der Buchse 10 in Lossitz aufgesetzt und wird zu einer Drehung durch einen in einer Nut 12 im äusseren Umfang der Buchse 10 angeordneten Mitnehmerring 13 veranlasst. Der Mitnehmerring 13 schafft zwischen der Buchse 10 und dem rotierenden Gleitring 11 eine reibschlüssige Verbindung, um eine ausreichend hohe Drehkraft von der Buchse 10 auf den Gleitring 11 zu übertragen und diesen bei Rotation der Welle 3 bzw. Buchse 10 ebenfalls in Rotation zu versetzen, ohne dass dabei die durch den Lossitz begründete Beweglichkeit des Gleitringes 11 wesentlich beeinträchtigt wird. Bei dem Mitnehmerring 13 kann es sich um einen O-Ring aus einem gummielastischen Material handeln, dem keine oder eine nur vernachlässigbar geringe Dichtwirkung zukommen braucht. Der Mitnehmerring 13 übt ferner eine zentrierende Wirkung auf den Gleitring 11 aus. Die Erfindung ist auf die vorbeschriebene Art der Drehkraftübertragung von der Buchse 10 auf den Gleitring 11 nicht beschränkt. Vielmehr können auch andere diese Funktion übernehmende Massnahmen vorgesehen werden, vorausgesetzt sie beeinträchtigen nicht die Beweglichkeit des Gleitringes 11.

Von der Buchse 10 steht radial nach aussen ein Flansch oder Stützelement 14 ab, an dem aussenumfänglich eine Umfangswand oder Abschirmung 15 angeformt sein kann, die den Gleitring 11 wenigstens teilweise aussenumfänglich übergreift und gegen schädliche Umgebungseinflüsse abschirmen kann. Zwischen den benachbarten Wandbereichen des Gleitringes 11 und des Stützelementes 14 bzw. der Abschirmung 15 ist ein ausreichendes Spiel vorgesehen, so dass die Beweglichkeit des Gleitringes 11 durch diese baulichen Massnahmen nicht behindert ist.

Die einander zugewandten Stirnflächen der Gleitringe 5, 11 schaffen im wesentlichen radial ausgerichtete Gleitflächen 6, 16, zwischen denen bei Betrieb ein Dichtspalt gebildet wird, der die Gleitflächen 6, 16 in einem berührungslosen Abstand voneinander hält. Bei Stillstand der Welle 3 werden die Gleitflächen 6, 16 dagegen durch die Vorspannkraft der Feder 7 in dichtendem Eingriff miteinander gedrückt. Vorzugsweise sind in wenigstens einer der Gleitflächen 6, 16 förderwirksame Strukturen eingebracht, um ein gasförmiges abzudichtendes Medium zwischen die Gleitflächen 6, 16 zu pumpen und dadurch die Dichtspaltbildung zu fördern. Derartige förderwirksame Strukturen sind dem Fachmann bekannt und brauchen hier nicht näher erläutert zu werden. Es kann z.B. auf BURGMANN, Gasgeschmierte Gleitringdichtungen, a.a.O., Seiten 16 ff. verwiesen werden.

In einer Ausnehmung 17, die seitens der dem Gleitring 11 zugewandten Stirnwand des Stützelementes 14 eingebracht ist, ist ein Anlagering 18 aufgenommen, der einen im wesentlichen L- oder winkelförmigen Querschnitt hat und mit einem seiner Stegbereiche 21, 22 in der Ausnehmung 17 angeordnet ist, während der andere Stegbereich 22 über die benachbarte Stirnwand des Stützelementes 14 gegen den Gleitring 11 etwas vorsteht. Der Stegbereich 22 schafft eine axiale ringförmige Anlagefläche 19, an der der Gleitring 11 anliegen kann und hierdurch eine axiale Abstützung erfährt.

Der Gleitring 11 ist damit längs der ringförmigen Anlagefläche 19 an einer zwischenliegenden Position zwischen seinem äusseren Umfang 23 und inneren Umfang 24 am Stützelement 14 axial abgestützt, während ansonsten zwischen dem Stützelement 14 und dem Gleitring 11 ein Spalt vorgesehen ist, in den das abzudichtende Medium eindringen kann. Um eine Leckage des abzudichtenden Mediums längs des Spaltes zu verhindern, ist zwischen dem in der Ausnehmung 17 angeordneten Stegbereich 21 des Anlageringes 18 und einer benachbarten Wandung des Stützelementes 14 ein Dichtring 27 in einer Nut 20 vorgesehen, die im Stützring 14 so eingebracht ist, dass eine vom Gleitring 11 auf den Anlagering 18 ausgeübte axiale Kraft F auf den Dichtring 27 übertragen wird und diesen in eine dichtende Eingriffnahme mit den benachbarten Wandbereichen des Anlageringes 18 und der Nut 20 beaufschlagt. Bei dem Dichtring 27 handelt es sich vorzugsweise um einen O-Ring, jedoch können auch andere geeignete Dichtringkonfigurationen, wie Ringe mit C-, U- oder V-förmigem Querrschnitt vorgesehen sein.

Der Anlagering 18 besteht vorzugsweise aus einem Material mit einem gleichen oder wenigstens annähernd gleichen Wärmeausdehnungskoeffizient wie das Material, aus dem der Gleitring 11 gebildet ist. Bevorzugte Materialien für den Gleitring 11 sind Hartmaterialien wie Wolframkarbid (WC) oder Siliciumkarbid (SiC). Demzufolge sollte der Anlagering 18 aus einem ebensolchen Material gebildet sein. Die Erfindung ist jedoch auf eine derartige Materialkombination für den Gleitring 11 und den Anlagering 18 nicht beschränkt. Vielmehr können auch unterschiedliche Materialien mit ähnlichen Wärmeausdehnungskoeffizienten für diese Teile vorgesehen sein. Auch ermöglicht es die Erfindung, dass der Anlagering 18 aus einem Stahlmaterial und der Gleitring 11 aus einem Hartmaterial bestehen kann. In diesem Fall würden sich bei Temperaturänderung zwar unterschiedliche thermisch bedingte Wärmedehnungen am Gleitring 11 und Anlagering 18 ergeben, deren schädliche Auswirkungen jedoch durch die nachfolgend beschriebenen Dimensionierungsmassnahmen kompensiert werden können.

Es wurde festgestellt, dass eine durch unterschiedliche Wärmedehnung zwischen dem Gleitring 11 und dem Anlagering 18 längs der Anlagefläche 19 unter der Wirkung einer axialen Kraft F hervorgerufene radial gerichtete Reibkraft R minimiert werden kann, wenn die Anlagefläche 19 so dimensioniert ist, dass ein Belastungsfaktor m, definiert als

$$ m = \frac{D_A{}^2 - d_H{}^2}{D_A{}^2 - d_A{}^2} $$

im Bereich zwischen > 0 und ≤ 2,5, vorzugsweise zwischen ≥ 0,3 und ≤ 2,0, liegt. Es bedeuten:

$D_A$ = äussere radiale Abmessung der Anlagefläche 19,
$d_A$ = innere radiale Abmessung der Anlagefläche 19,
$d_H$ = innere radiale Abmessung einer hydraulischen, dem Druck des abzudichtenden Mediums ausgesetzten Wirkfläche $A_H$ der Gleitringpaarung. Der auf die Wirkfläche $A_H$ ausgeübte hydraulische Druck bewirkt die Kraft F, unter der der rotierende Gleitring 11 an der Anlagefläche 19 des Anlageringes 18 anliegt.

Wenn die vorerwähnten Bedingungen erfüllt sind, wird einerseits gewährleistet, dass die Kraft F ausreichend gross ist, um eine zuverlässige dichtende Beziehung zwischen dem Gleitring 11 und der Anlagefläche 19 zu erhalten, so dass ein Leckage längs der Anlagefläche 19 verhindert oder wenigstens auf einen minimal geringen Betrag gehalten ist. Andererseits kann die in Folge einer unterschiedlichen radiale Wärmedehnung des Gleitringes 11 gegenüber dem Anlagering 18 resultierende radialen Reibkraft R längs der Anlagefläche 19 nicht so gross werden, dass ein dadurch auf den Gleitring 11 ausgeübtes Kippmoment zu einer unzulässigen Abweichung von der ideellen parallelen Ausrichtung der Gleitflächen 6, 16 zueinander bei Betrieb führen kann. Insbesondere könnte ein in der Zeichnung in Gegenuhrzeigersinn gerichtetes Kippmoment unter einer radial nach aussen gerichteten Reibkraft R zur Bildung eines Dichtspaltes zwischen den Gleitflächen 6, 16 mit A-förmigem Querschnitt führen, während ein Kippmoment in Uhrzeigerrichtung unter einer radial nach innen gerichteten Reibkraft R die Bildung eines V-Spaltes zur Folge hätte. Beide Abweichungen von der ideellen parallelen Spaltkonfiguration haben erhöhten Verschleiss an den Gleitflächen 6, 16 und eine unkontrollierte Leckage längs des Dichtspaltes zur Folge. Mit der Erfindung wird erreicht, dass die V- oder A-Spalt-Bildung ganz oder wenigstens weitestgehend verhindert wird, so dass eine hierdurch bedingte Einschränkung der Lebensdauer und Beeinträchtigung der Betriebszuverlässigkeit der Gleitringdichtungsanordnung vermieden werden.

Ferner ist zu beachten, dass der Dichtring 27 unter den einwirkenden Drücken des abzudichtenden Mediums nicht in einen axialen Spaltbereich, der sich zwischen den gegenüberliegenden benachbarten Stirnflächen 25, 26 des Anlageringes 18 bzw. des Stützelementes 14 bilden kann, gepresst bzw. extrudiert wird. Es wurde gefunden, dass diese Gefahr dann nicht besteht, wenn ein Faktor k, definiert als

$$ k = \frac{D^{*2} - d_H{}^2}{D^2 - d^2} $$

im Bereich zwischen > 0 und ≤ 0,5, vorzugsweise zwischen 0,05 und 0,2, liegt. Darin bedeuten:

D = radiale Abmessung am äusseren Umfang der Wirkdichtfläche A des rotierenden Gleitringes 11,
d = radiale Abmessung am inneren Umfang der Wirkdichtfläche A des rotierenden Gleitringes 11,
D* = radiale Abmessung am äusseren radialen Ende des Spaltbereiches zwischen den Stirnflächen 25, 26. (Die innere radiale Abmessung des Spaltbereiches kann der inneren radialen Abmessung $d_A$ der Anlagefläche 19 entsprechen).

Vorausgehend wurde die Erfindung an Hand einer Ausführungsform beschrieben, bei der die Anlagefläche für den rotierenden Gleitring an einem separaten Anlagering vorgesehen ist. Der Anlagering könnte auch weggelassen werden, und anstelle davon am Stützelement an einer zwischenliegenden Stelle ein ringförmiger Vorsprung ausgebildet sein, der eine Anlagefläche mit den vorgenannten radialen Abmessungen schafft. In diesem Fall wäre der Dichtring 27 so vorzusehen, dass er den Spalt zwischen den gegenüberliegenden Stirnseiten des Gleitringes und Stützelementes aufstromseitig der Anlagefläche abzudichten vermag. Der Anlagering braucht ferner nicht die bevorzugte, in der Zeichnung gezeigte L-förmige Querschnittskonfiguration zu haben, sondern könnte auch rechteckförmig ausgebildet sein. Obschon die Erfindung besondere Vorteile bei Anwendung bei einer gasgeschmierten Gleitringdichtungsanordnung bietet, könnte sie auch bei flüssigkeitsgeschmierten derartigen Anordnungen zum Einsatz kommen, um thermisch bedingte Verwerfungen einer vorgegebenen Dichtspaltgeometrie auszuschalten oder wenigstens zu minimieren.

**Patentansprüche**

1. Gleitringdichtungsanordnung, mit einem drehfesten Gleitring (5) und einem zur gemeinsamen Drehung mit einem rotierenden Bauteil (10) in Lossitz gehaltenen Gleitring (11), welche Gleitringe zusammenwirkende, bei Betrieb zwischen sich einen Dichtspalt bildende und im wesentlichen radial ausgerichtete Dichtflächen (6,16) aufweisen, wobei der rotierende Gleitring (11) an seinem von der Dichtfläche abgewandten axialen Ende an einer Anlagefläche (19) eines zur gemeinsamen Drehung mit dem rotierenden Bauteil angeordneten Stützelementes (14) axial abgestützt und mit entgegengerichteten axialen Kräften aus dem Druck des abzudichtenden Mediums beaufschlagbar ist, wobei eine in Richtung auf die Anlagefläche wirkende Kraft (F) proportional dem Druck des Mediums auf eine hydraulische Wirkfläche ($A_H$) der Dichtungsanordnung ist, wobei die Anlagefläche so dimensioniert ist, dass ein Belastungsfaktor m, definiert als

$$m = \frac{D_A{}^2 - d_H{}^2}{D_A{}^2 - d_A{}^2}$$

im Bereich > 0 und ≤ 2,5, vorzugsweise ≥ 0,3 und ≤ 2,0, liegt,
wobei bedeuten:

$D_A$ = äussere radiale Abmessung der Anlagefläche,
$d_A$ = innere radiale Abmessung der Anlagefläche,
$d_H$ = innere radiale Abmessung der hydraulischen Wirkfläche, **dadurch gekennzeichnet, dass** die Anlagefläche (19) an einem am Stützelement (14) mit Lossitz angeordneten Anlagering (18) vorgesehen ist.

2. Gleitringdichtungsanordnung nach Anspruch 1, **dadurch gekennzeichnet, dass** der Anlagering (18) aus einem Material mit einem gleichen oder annähernd gleichen Wärmeausdehungskoeffizient wie der des rotierenden Gleitringes (11) gebildet ist.

3. Gleitringdichtungsanordnung nach Anspruch 1 oder 2, **dadurch gekennzeichnet, dass** ein axialer Spaltbereich zwischem dem Anlagering (18) und dem Stützelement (14) durch ein dem Druck des abzudichtenden Mediums ausgesetztes Dichtungselementes (27) abgedichtet ist.

4. Gleitringdichtungsanordnung nach Anspruch 4, **dadurch gekennzeichnet, dass** der Spaltbereich so dimensioniert ist, dass ein Faktor k, definiert als

$$k = \frac{D^{*2} - d_H{}^2}{D^2 - d^2}$$

im Bereich > 0 bis ≤ 0,5, vorzugsweise 0,05 bis 0,2, liegt,
wobei bedeuten:

D = radiale Abmessung am äusseren Umfang der Wirkdichtfläche (A) des rotierenden Gleitringes (11),
d = radiale Abmessung am inneren Umfang der Wirkdichtfläche des rotierenden Gleitringes,
D* = radiale Abmessung am äusseren radialen Ende des Spaltebereiches.

**Claims**

1. A mechanical face seal device, comprising a non-rotational seal ring (5) and a seal ring (11) seated in loose fit for rotation in common with a rotary component (10), said seal rings having co-operating essentially radially oriented seal faces (6, 16) forming a seal gap therebetween during operation, said rotary seal ring (11) at the axial end thereof remote from the seal face is axially supported on a contact face (19) of a support member (14) arranged for rotation in common with the rotary component and is adapted to be subjected to oppositely directed axial forces by the pressure of the medium to be sealed, in which a force (F) effective in the direction of the contact face is proportional to the pressure of the medium on a hydraulically effective surface ($A_H$) of the seal device, said contact face is dimensioned such that a load factor m, defined as

$$m = \frac{D_A{}^2 - d_H{}^2}{D_A{}^2 - d_A{}^2}$$

is in the range > 0 and ≤ 2.5, preferably ≥ 0.3 and ≤ 2.0, wherein:

$D_A$ = outer radial dimension of the contact face,
$d_A$ = inner radial dimension of the contact face,
$d_H$ = inner radial dimension of the hydraulically effective surface,

**characterized in that** said contact face (19) is provided on a contact ring (18) in loose fit seated on the support member (14).

2. The mechanical face seal device according to claim 1, **characterized in that** the contact ring (18) is formed of a material having the same or approximately the same coefficient of thermal expansion as that of the rotary seal ring (11).

3. The mechanical face seal device according to claim 1 or 2, **characterized in that** an axial gap portion between the contact ring (18) and the support member (14) is sealed by a seal element (27) subjected to the pressure of the medium to be sealed.

4. The mechanical face seal device according to claim 4, **characterized in that** the gap portion is dimensioned such that a factor k, defined as

$$k = \frac{D^{*2} - D_H^{\ 2}}{D^2 - d^2}$$

is in the range > 0 to ≤ 0.5, preferably 0.05 to 0.2, wherein:

D = radial dimension at the outer periphery of the effective sealing surface (A) of the rotary seal ring (11),
D = radial dimension at the inner periphery of the effective sealing surface of the rotary seal ring,
D* = radial dimension at the outer radial end of the gap portion.

**Revendications**

1. Garniture mécanique d'étanchéité avec une bague de glissement (5) fixe en rotation et une bague de glissement (11) en ajustement libre pour la rotation commune avec un composant tournant (10), lesquelles bagues de glissement présentent des surfaces d'étanchéité (6, 16) coopérantes, formant entre elles une fente d'étanchéité en fonctionnement et essentiellement orientées radialement, dans laquelle la bague de glissement tournante (11) s'appuie axialement à son extrémité axiale opposée à la surface d'étanchéité sur une surface d'applique (19) d'un élément d'appui (14) disposé pour la rotation commune avec le composant tournant et peut être soumise à des forces axiales opposées provenant de la pression du médium à étanchéifier, dans laquelle une force (F) agissant en direction de la surface d'applique est proportionnelle à la pression du médium sur une surface active hydraulique ($A_H$) de la garniture d'étanchéité et dans laquelle la surface d'applique est dimensionnée de telle manière qu'un facteur de charge m défini par

$$m = \frac{D_A^{\ 2} - d_H^{\ 2}}{D_A^{\ 2} - d_A^{\ 2}}$$

se situe dans la plage > 0 et ≤ 2,5, de préférence ≥ 0,3 et ≤ 2,0,
où :

$D_A$ = dimension radiale extérieure de la surface d'applique,
$d_A$ = dimension radiale intérieure de la surface d'applique,
$d_H$ = dimension radiale intérieure de la surface active hydraulique,

**caractérisée par le fait que** la surface d'applique (19) est prévue sur une bague d'applique (18) disposée en ajustement libre sur l'élément d'appui (14).

2. Garniture mécanique d'étanchéité selon la revendication 1, **caractérisée par le fait que** la bague d'applique (18) est formée d'un matériau possédant un coefficient de dilatation thermique identique ou à peu près identique à celui de la bague de glissement tournante (11).

3. Garniture mécanique d'étanchéité selon la revendication 1 ou 2, **caractérisée par le fait qu'**une fente axiale entre la bague d'applique (18) et l'élément d'appui (14) est étanchéifiée par un élément d'étanchéité exposé à la pression du médium à étanchéifier.

4. Garniture mécanique d'étanchéité selon la revendication 4, **caractérisée par le fait que** la fente est dimensionnée de telle manière qu'un facteur k défini par

$$k = \frac{D^{*2} - d_H^{\ 2}}{D^2 - d^2}$$

se situe dans la plage > 0 à ≤ 0,5, de préférence 0,05 à 0,2,
où :

D = dimension radiale à la circonférence extérieure de la surface d'étanchéité active (A) de la bague de glissement tournante (11),
d = dimension radiale à la circonférence intérieure de la surface d'étanchéité active de la bague de glissement tournante,

**EP 1 271 023 B1**

D* = dimension radiale à l'extrémité extérieure
radiale de la fente.

Fig. 1

Fig. 2